# EUROPÄISCHE PATENTSCHRIFT

(11) **EP 3 999 752 B1**
(45) Veröffentlichungstag und Bekanntmachung des Hinweises auf die Patenterteilung: **28.02.2024**
(21) Anmeldenummer: 20742683.4
(22) Anmeldetag: 14.07.2020
(51) Int. Cl.: F16C 29/00, F16C 29/04, F16C 29/12

(54) **ROLLENWAGEN**
ROLLER CARRIAGE
CHARIOT À GALETS

(30) Priorität: 17.07.2019 DE 102019119337
(43) Veröffentlichungstag der Anmeldung: 25.05.2022
(73) Patentinhaber: Accuride International GmbH, 65582 Diez/Lahn (DE)
(72) Erfinder: QUIREIN, Thomas, 65582 DIEZ (DE); NEUHAUS, Christoph, 56412 Niederelbert (DE)
(74) Vertreter: Siebert, Karsten
(86) Internationale Anmeldenummer: PCT/EP2020/069914
(87) Internationale Veröffentlichungsnummer: WO 2021/009181

(56) Entgegenhaltungen:
- DE-C- 464 431
- JP-A- H1 137 154
- US-A- 4 714 354
- US-A- 5 642 941

## Beschreibung

Die vorliegende Erfindung betrifft einen Rollenwagen zum verschiebbaren Führen in einer Längsrichtung an einem Schienenelement, wobei der Rollenwagen aufweist einen Träger und eine erste Laufrolle oder ein erste Paar von Laufrollen, eine zweite Laufrolle oder ein zweites Paar von Laufrollen und eine dritte Laufrolle oder ein drittes Paar von Laufrollen, wobei jede der ersten Laufrolle oder des ersten Paars von Laufrollen, der zweiten Laufrolle oder des zweiten Paars von Laufrollen und der dritten Laufrolle oder des dritten Paars von Laufrollen jeweils um eine Drehachse drehbar an dem Träger montiert ist, wobei die Drehachsen im Wesentlichen parallel zueinander sind und wobei die erste Laufrolle oder das erste Paar von Laufrollen, die zweite Laufrolle oder das zweite Paar von Laufrollen und die dritte Laufrolle oder das dritte Paar von Laufrollen derart an dem Rollenwagen angeordnet sind, dass die erste Laufrolle oder das erste Paar von Laufrollen mit einer ersten Laufbahn des Schienenelements in Eingriff bringbar ist und die zweite Laufrolle oder das zweite Paar von Laufrollen und die dritte Laufrolle oder das dritte Paar von Laufrollen mit einer zweiten Laufbahn des Schienenelements in Eingriff bringbar sind. Darüber hinaus weist der Rollenwagen einen gegenüber dem Träger um eine Schwenkachse verschwenkbaren Hebel auf, wobei der Hebel einen ersten Arm aufweist, wobei die beweglich gelagerte Laufrolle oder das beweglich gelagerte Paar von Laufrollen um die Drehachse drehbar an dem ersten Arm montiert ist und wobei der Hebel mit dem ersten Federelement in einer Schwenkrichtung federnd vorgespannt ist.

Es sind Linearführungen mit zwei Schienenelementen und einer Führung zwischen den zwei Schienenelementen in mannigfaltigen Ausführungsformen bekannt. In vielen derartigen Linearführungen ist die Führung zwischen den beiden Schienenelementen in Form eines Wälzkörperkäfigs realisiert. Dabei sind in dem Wälzkörperkäfig Wälzkörper zur Reduzierung der Reibung zwischen den Schienenelementen bei einer Relativbewegung der Schienenelemente gegeneinander aufgenommen. Derartige Linearführungen werden in verschiedenen Haushaltsgeräten aber auch im Automobilbau, bei der Möbelkonstruktion und in vielen Anwendungen eingesetzt. In Varianten davon ist eines der Schienenelemente deutlich kürzer als das andere. Soll mit einer solchen Linearführung ein sehr langer Verschiebeweg realisiert werden, so erfordert dies insbesondere die Einhaltung enger Toleranzen bei der Herstellung des langen Schienenelements.

Gemäß der JP H11 37154 A sind Kugellager abwechselnd an einem Schlitten angeordnet, so dass beide Flächen mit vertikalen Führungen eines Rahmens in Kontakt kommen. Die Kugellager sind so angeordnet, dass sie mit den horizontalen Führungen in Berührung kommen. Das dazwischenliegende Kugellager ist mit einer Tellerfeder versehen, um eine vertikale Kraft auf die horizontale Führung zu übertragen, und das Kugellager ist an einem Spannschieber befestigt. Wenn die Kraft über einen Zahnriemen auf den Schlitten übertragen wird, so bewegt sich der Schlitten linear und gleichmäßig ohne Spiel entlang der linearen Führung des Rahmens. Da ein Teil des linearen Führungsmechanismus und ein Teil der Kraftübertragung als integraler Bestandteil des Rahmens ausgebildet sind, werden die Verbindungsstellen reduziert, um eine Miniaturisierung zu erreichen. Daa die Anzahl der Einzelteile reduziert ist, wird zudem der Arbeitsaufwand für die Montage verringert, und die Kosten können gesenkt werden.

Die US 4,714,354 A offenbart eine Stützvorrichtung zur Abstützung eines sich entlang einer Führungsstange bewegenden Schlittens an der Führungsstange. Die Stützvorrichtung umfasst mindestens zwei mit V-förmigen Nuten versehene Gleitlager und davon getrennte Lager, die den jeweiligen Gleitlagern quer zur Führungsstange gegenüberliegend angeordnet sind. Die Stützvorrichtung stützt den Schlitten auf der Führungsstange durch Einklemmen der Führungsstange zwischen den Gleitlagern und den davon getrennten Lagern.

Die DE 464 431 C offenbart ferner einen Laufwagen der eingangs genannten Art mit den Merkmalen des Oberbegriffs von Anspruch 1.

Demgegenüber ist es Aufgabe der vorliegenden Erfindung, einen Rollenwagen für eine Linearführung sowie eine Linearführung zu realisieren, bei welcher die Anforderungen an die Fertigungstoleranzen bei der Herstellung des langen Schienenelements reduziert sind.

Zur Lösung dieser Aufgabe wird ein Rollenwagen zum verschiebbaren Führen in einer Längsrichtung an einem Schienenelement vorgeschlagen, wobei der Rollenwagen einen Träger und eine erste Laufrolle oder ein erstes Paar von Laufrollen, eine zweite Laufrolle oder ein zweites Paar von Laufrollen sowie eine dritte Laufrolle oder ein drittes Paar von Laufrollen aufweist, wobei jede der ersten Laufrolle oder des ersten Paars von Laufrollen, der zweiten Laufrolle oder des zweiten Paars von Laufrollen und der dritten Laufrolle oder des dritten Paars von Laufrollen jeweils um eine Drehachse drehbar an dem Träger montiert ist, wobei die Drehachsen im Wesentlichen parallel zueinander sind und wobei die erste Laufrolle oder das erste Paar von Laufrollen, die zweite Laufrolle oder das zweite Paar von Laufrollen und die dritte Laufrolle oder das dritte Paar von Laufrollen derart an dem Rollenwagen angeordnet sind, dass die erste Laufrolle oder das erste Par von Laufrollen mit einer ersten Laufbahn des Schienenelements in Eingriff bringbar ist und die zweite Laufrolle oder das zweite Paar von Laufrollen und die dritte Laufrolle oder das dritte Paar von Laufrollen mit einer zweiten Laufbahn des Schienenelements in Eingriff bringbar sind, wobei eine der ersten Laufrolle oder des ersten Paars von Laufrollen, der zweiten Laufrolle oder des zweiten Paars von Laufrollen und der dritten Laufrolle oder des dritten Paars von Laufrollen in einer Querrichtung senkrecht zu der Längsrichtung gegenüber dem Träger beweglich gelagert ist und wobei die beweglich gelagerte Laufrolle oder das beweglich gelagerte Paar von Laufrollen mit einem ersten Federelement in der Querrichtung federnd vorgespannt ist. Darüber hinaus weist der Rollenwagen einen gegenüber dem Träger um eine Schwenkachse verschwenkbaren Hebel auf, wobei der Hebel einen ersten Arm aufweist, wobei die beweglich gelagerte Laufrolle oder das beweglich gelagerte Paar von Laufrollen um die Drehachse drehbar an dem ersten Arm montiert ist, wobei der Hebel mit dem ersten Federelement in einer Schwenkrichtung federnd vorgespannt ist, wobei der Hebel einen zweiten Arm aufweist, wobei die Schwenkachse den Hebel in den ersten Arm und den zweiten Arm teilt und wobei an dem zweiten Arm ein mit der ersten Laufbahn in Eingriff bringbarer Bremsbacken angeordnet ist, so dass die beweglich gelagerte Laufrolle oder das beweglich gelagerte Paar von Laufrollen aus einer führenden Position in eine freie Position und gleichzeitig der Bremsbacken aus einer gelösten Position in eine bremsende Position verschwenkbar ist.

Eine derartige Schwingenlagerung der beweglich gelagerten Laufrolle oder des beweglich gelagerten Paars von Laufrollen, insbesondere der ersten Laufrolle bzw. des ersten Paars von Laufrollen, ist konstruktiv einfach und ausfallsicher.

Die grundlegende Idee der vorliegenden Erfindung ist es, bei einer Linearführung eines der Schienenelemente, insbesondere das kürzere Schienenelement, durch einen Rollenwagen zu ersetzen. Dabei ermöglicht der erfindungsgemäße Rollenwagen aufgrund der beweglichen Lagerung einer der Laufrollen oder der Paare von Laufrollen in der Querrichtung einen Ausgleich von über die Länge des Schienenelements hinweg auftretenden Fertigungstoleranzen.

Im Sinne der vorliegenden Anmeldung bezeichnet ein Paar von Laufrollen eine Tandemanordnung von genau zwei Laufrollen. Dabei sind die Drehachsen der beiden Laufrollen des Paars von Laufrollen an einem gemeinsamen Achsträger montiert, der wiederum gegenüber dem Träger des Rollenwagens um eine Schwenkachse verschwenkbar ist. Dabei ist die Schwenkachse in einer Ausführungsform an einer Position angeordnet, an der in einer alternativen Ausführungsform die Drehachse einer einzigen Laufrolle an dem Träger montiert ist. In einer Ausführungsform der Erfindung weisen die beiden Drehachsen des Paars von Laufrollen den kleinstmöglichen Achsabstand bei einem vorgegebenen Durchmesser der beiden Laufrollen auf.

Ein derartiger Toleranzausgleich an einem Rollenwagen ist grundsätzlich auch in Ausführungsformen mit mehr als drei Laufrollen oder Paaren von Laufrollen möglich. Allerdings weist in einer Ausführungsform der Erfindung der Rollenwagen genau drei Laufrollen oder Paare von Laufrollen auf, wobei genau eine der ersten Laufrolle oder des ersten Paars von Laufrollen, der zweiten Laufrolle oder des zweiten Paars von Laufrollen und der dritten Laufrolle oder des dritten Paars von Laufrollen in der Querrichtung federnd vorgespannt ist. Ein solcher Rollenwagen mit drei Laufrollen oder drei Paaren von Laufrollen ermöglicht einen optimierten Toleranzausgleich bei reduziertem konstruktivem Aufwand.

Während es möglich ist, in einer solchen Ausführungsform genau drei Paare von Laufrollen als Tandemanordnung vorzusehen, weist in einer Ausführungsform der Rollenwagen genau ein Paar von Laufrollen als Tandemanordnung und genau zwei weitere einzelne Laufrollen auf.

In einer Ausführungsform der Erfindung ist die erste Laufrolle oder das erste Paar von Laufrollen senkrecht zu der Längsrichtung vorgespannt. Eine derartige Realisierung ist insbesondere dann sinnvoll, wenn der Rollenwagen genau drei Laufrollen bzw. Paare von Laufrollen, insbesondere aber ein Paar von Laufrollen, nämlich das erste Paar von Laufrollen, sowie zwei einzelne Laufrollen, nämlich die zweite und die dritte Laufrolle, aufweist.

In einer Ausführungsform der Erfindung ist die erste Laufrolle oder das erste Paar von Laufrollen in der Längsrichtung zwischen der zweiten Laufrolle oder dem zweiten Paar von Laufrollen und der dritten Laufrolle oder dem dritten Paar von Laufrollen angeordnet. Dies ist insbesondere vorteilhaft, wenn der Rollenwagen genau drei Laufrollen oder Paare von Laufrollen aufweist.

In einer Ausführungsform der Erfindung ist die in der Querrichtung bewegliche Lagerung einer Laufrolle oder eines Paars von Laufrollen mit Hilfe einer Kulissenführung, beispielsweise in Form eines beweglich in einem in der Querrichtung verlaufenden Langloch gelagerten Stifts, realisiert.

Ist statt einer einzigen Laufrolle ein Paar von Laurollen in einer Tandemanordnung an dem Hebel montiert, so ist in einer Ausführungsform die Schwenkachse des Achsträgers an einem Punkt an dem Hebel montiert an welchem bei einer Konstruktion mit nur einer Laufrolle der Achspunkt dieser einen Laufrolle angeordnet wäre.

Der Hebel weist zusätzlich zu dem ersten Arm einen zweiten Arm auf, wobei die Schwenkachse den Hebel in den ersten Arm und den zweiten Arm teilt, wobei an dem zweiten Arm ein mit der ersten Laufbahn in Eingriff bringbarer Bremsbacken angeordnet ist, sodass die beweglich gelagerte Laufrolle bzw. das Paar von Laufrollen, insbesondere die erste Laufrolle bzw. das erste Paar von Laufrollen, aus einer führenden Position in eine freie Position und gleichzeitig der Bremsbacken aus einer gelösten Position in eine bremsende Position verschwenkbar ist. Mit einem einzigen beweglichen Element, nämlich dem Hebel, lässt sich so sowohl eine Bremsfunktion als auch gleichzeitig der erfindungsgemäße Toleranzausgleich realisieren. Es versteht sich, dass in der bremsenden Position des Bremsbackens gleichzeitig die Laufrolle bzw. das Paar von Laufrollen in der freien Position ist, sodass die Laufrolle bzw. das Paar von Laufrollen außer Eingriff mit der entsprechenden Laufbahn des Schienenelements ist.

In einer Ausführungsform der vorliegenden Erfindung ist der Hebel derart federnd vorgespannt, dass in einem relativ entspannten Zustand des ersten Federelements der Bremsbacken in der bremsenden Position ist und die beweglich gelagerte Laufrolle bzw. das Paar von Laurollen, insbesondere die erste Laufrolle bzw. das erste Paar von Laufrollen, in der freien Position ist und dass in einem relativ zu dem entspannten Zustand gespannten Zustand des ersten Federelements der Bremsbacken in der gelösten Position ist und die beweglich gelagerte Laufrolle bzw. das Paar von Laufrollen, insbesondere die erste Laufrolle bzw. das erste Paar von Laufrollen, in der führenden Position ist. Mit anderen Worten ausgedrückt ist in einer solchen Ausführungsform der Erfindung der Hebel so vorgespannt, dass er den Bremsbacken in Richtung der entsprechenden Laufbahn des Schienenelements drückt. Zum Lösen der Bremswirkung des Bremsbackens muss der Hebel entgegen der Federkraft des ersten Federelements verschwenkt werden. In einer solchen Ausführungsform des Rollenwagens ist der Ausgangszustand des Rollenwagens gebremst und die Bremswirkung muss entgegen der Federkraft des ersten Federelements aufgehoben werden. Gleichzeitig kommt dann die beweglich gelagerte Laufrolle bzw. das beweglich gelagerte Paar von Laufrollen, insbesondere die erste Laufrolle bzw. das erste Par von Laufrollen, mit der Laufbahn der Laufschiene in Eingriff.

Um die Bremswirkung zu lösen, weist der Hebel in einer Ausführungsform einen mit einem Betätigungsmittel in Eingriff bringbaren Betätigungspunkt auf.

In einer Ausführungsform der Erfindung umfasst der Rollenwagen ein solches Betätigungsmittel in Form eines von einem Benutzer betätigbaren Bedienelements. Ein Beispiel für ein solches Bedienelement ist ein hebelartiges Gestänge, so wie es beispielsweise von Sitzverstellungen für Kraftfahrzeuge bekannt ist. In einer Ausführungsform der Erfindung ist das Bedienelement ein Bowdenzug, vorzugsweise mit einem auslösenden Hebel am zweiten Ende des Bowdenzug. In einer weiteren Ausführungsform ist das Bedienelement ein elektrisches Stellglied, beispielsweise ein Elektromotor oder ein elektrischer Linearantrieb.

In einer weiteren Ausführungsform jedoch ist das Bedienelement kein Element des Rollenwagens und wird zur Betätigung des Hebels mit dem Betätigungspunkt in Eingriff gebracht.

In einer Ausführungsform der Erfindung weist der Rollenwagen ein Betätigungsmittel auf, wobei das Betätigungsmittel ein Verriegelungsbolzen ist, wobei der Verriegelungsbolzen in einer Querrichtung aus einer verriegelnden Position über eine entriegelnde Position in eine betätigende Position beweglich, vorzugsweise linear verschieblich, an dem Träger montiert ist. Dabei ist der Verriegelungsbolzen mit einem zweiten Federelement federnd in die verriegelnde Position vorgespannt. Es versteht sich, dass der Verriegelungsbolzen in der verriegelnden Position in eine Ausnehmung, beispielsweise ein Loch in dem Schienenelement, eingreift, um nach Art einer Sperrklinke die Verriegelung zu bewirken.

In einer Ausführungsform ist der Verriegelungsbolzen in der gleichen Querrichtung, insbesondere in der sogenannten Hochrichtung, beweglich an dem Träger montiert wie die beweglich gelagerte Laufrolle bzw. das Paar von Laufrollen. Dabei greift der Verriegelungsbolzen beispielweise in eine Ausnehmung in oder neben einer Lauffläche des Schienenelements. Es sind ist jedoch auch eine Ausführungsform realisierbar, bei welcher der Verriegelungsbolzen in einer Richtung senkrecht zu der Bewegungsrichtung der Laufrollen bzw. des Paars von Laufrollen beweglich an dem Träger montiert ist. In einer solchen Ausführungsform greift der Verriegelungsbolzen beispielweise in eine Ausnehmung in einem die Laufflächen verbindenden Rücken des Schienenelements ein.

Ferner sind der Verriegelungsbolzen sowie der Hebel mit dem Betätigungspunkt derart ausgestaltet und angeordnet, dass dann, wenn der Bremsbacken in der bremsenden Position ist, der Verriegelungsbolzen entgegen einer Federkraft des zweiten Federelements aus der verriegelnden Position in die entriegelnde Position bewegbar ist, während der Bremsbacken der bremsenden Position verbleibt und dass dann, wenn der Verriegelungsbolzen entgegen der Federkraft des zweiten Fehlerelements aus der entriegelnden Position in die betätigende Position bewegt wird, der Verriegelungsbolzen mit dem Betätigungspunkt in Eingriff ist und den Hebel verschwenkt. Bei dieser von dem Verriegelungsbolzen angetriebenen Verschwenkbewegung des Hebels wird der Bremsbacken aus der bremsenden Position in die gelöste Position verschwenkt sowie gleichzeitig die erste Laufrolle bzw. das erste Paar von Laufrollen aus der freien Position in die führende Position in Eingriff mit der ersten Lauffläche des Schienenelements verschwenkt.

In einer Ausführungsform der Erfindung umfasst der Verriegelungsbolzen einen Indexsuchstift. Dabei weist der Indexsuchstift drei Verriegelungsstifte auf, die beweglich in einem Gehäuse in Richtung des Schienenelements vorgespannt sind. Das Gehäuse wiederum ist mit einem Schaft des Verriegelungsbolzens mitbewegt. Dabei weisen die Stifte voneinander verschiedene Abstände auf, die wiederum von den regelmäßigen Abständen der Ausnehmungen in dem Schienenelement verschieden sind. Auf diese Weise wird die Anzahl der Verriegelungspositionen erhöht.

Die Funktionsweise dieser Ausführungsform ist analog der zuvor beschriebenen, wobei der Schaft des Verriegelungsbolzens sowie der Hebel mit dem Betätigungspunkt derart ausgestaltet und angeordnet sind, dass dann, wenn der Bremsbacken in der bremsenden Position ist, der Schaft entgegen der Federkraft des zweiten Federelements aus der verriegelnden Position in die entriegelnde Position bewegbar ist, während der Bremsbacken der bremsenden Position verbleibt und dass dann, wenn der Schaft entgegen der Federkraft des zweiten Fehlerelements aus der entriegelnden Position in die betätigende Position bewegt wird, der Schaft mit dem Betätigungspunkt in Eingriff ist und den Hebel verschwenkt. Bei dieser von dem Schaft des Verriegelungsbolzens angetriebenen Verschwenkbewegung des Hebels wird der Bremsbacken aus der bremsenden Position in die gelöste Position verschwenkt sowie gleichzeitig die erste Laufrolle bzw. das erste Paar von Laufrollen aus der freien Position in die führende Position in Eingriff mit der ersten Lauffläche des Schienenelements verschwenkt.

Es versteht sich, dass auch in einer Ausführungsform mit einem Verriegelungsbolzen der Verriegelungsbolzen als Betätigungsmittel zum Betätigen bzw. Verschwenken des Hebels angetrieben werden muss. Dazu weist in einer Ausführungsform der Erfindung der Rollenwagen ein von einem Benutzer betätigbares Bedienmittel auf, das derart angeordnet und ausgestaltet ist, dass das Bedienmittel bei einer Betätigung den Verriegelungsbolzen aus der verriegelnden Position über die entriegelnde Position in die auslösende Position bewegt. In einer Ausführungsform ist das Bedienmittel ein Hebel, ein Bowdenzug oder ein elektrisches Stellglied, beispielsweise ein Elektromotor oder ein elektrischer Linearantrieb.

In einer Ausführungsform weist der Rollenwagen ein elektrisches Schaltelement auf, wobei das Schaltelement umfasst einen elektrischen Kontakt und ein elektrisch leitend mit dem Kontakt verbundenes Anschlusselement. Das Schaltelement bildet dann, wenn der Rollenwagen in einer Linearführung verbaut, d.h. an dem Schienenelement aufgenommen ist, zusammen mit mindesten einem an dem Schienenelement vorgesehenen Kontakt, dieser wird im Sinne der vorliegenden Anmeldung auch als Schienenkontakt bezeichnet, einen Schalter. Zu diesem Zweck ist der Kontakt des Schaltelements in der Querrichtung aus einer eingeschalteten Position in eine ausgeschaltete Position verschiebbar an dem Träger montiert, so dass der Kontakt mit dem komplementären an dem Schienenelement angeordneten Schienenkontakt elektrisch verbindbar und von diesem lösbar ist. Dabei ist der Kontakt derart mechanisch wirksam mit dem Hebel gekoppelt ist, dass eine Verschwenkbewegung des Hebels ein Verschieben des Kontakts in der Querrichtung aus der eingeschalteten Position in die ausgeschaltete Position oder umgekehrt bewirkt. Das Anschlusselement ist ferner derart ausgestaltet, dass mit dem Anschlusselement eine mit dem Rollenwagen mitbewegte elektrische Einrichtung, insbesondere ein elektrischer Verbraucher, verbindbar ist.

In einer Ausführungsform ist der Kontakt derart mechanisch wirksam mit dem Hebel gekoppelt, dass dann wenn der Bremsbacken in der gelösten Position ist, der Kontakt in der ausgeschalteten Position ist und dann wenn der Bremsbacken in der bremsenden Position ist, der Kontakt in der eingeschalteten Position ist. Auf diese Weise wird der elektrische Kontakt zwischen Schienenelement und Rollenwagen nur dann bereitgestellt, wenn der Rollenwagen nicht in Bewegung ist bzw. nicht bewegbar ist.

In einer weiteren Ausführungsform der Erfindung weisen zumindest die zweite Laufrolle bzw. das zweite Paar von Laurollen oder die dritte Laufrolle bzw. das dritte Paar von Laufrollen eine in einem Querschnitt parallel zu der Drehachse konkave Lauffläche auf. Auf diese Weise gewährleistet zumindest die zweite Laufrolle oder die dritte Laufrolle eine Führung des Rollenwagens gegenüber dem Schienenelement in einer Querrichtung, sofern die zweite Laufbahn komplementär dazu, nämlich konvex ausgestaltet ist. Alternativ ist eine Führung der zweiten und/oder der dritten Laufrolle bzw. des zweiten oder dritten Paars von Laufrollen gegenüber der zweiten Laufbahn des Schienenelements realisierbar, wenn zumindest eine der Laufflächen der Rollen konvex ausgestaltet ist und die zweite Laufbahn des Schienenelements komplementär dazu konkav.

In einer weiteren Ausführungsform weist dabei die erste Laufrolle bzw. das erste Paar von Laufrollen eine zylindermantelförmige Lauffläche auf. Auf diese Weise ist gleichzeitig auch ein Toleranzausgleich in der Querrichtung aufgrund der zylindermantelförmigen Lauffläche der ersten Laufrolle bzw. des ersten Paars von Laufflächen möglich.

Die zuvor genannte Aufgabe wird zudem auch von einer Linearführung mit einem Rollenwagen nach einer Ausführungsform, so wie sie zuvor diskutiert wurden, und einem Schienenelement mit einer ersten Laufbahn und einer zweiten Laufbahn gelöst. Dabei ist die erste Laufrolle derart angeordnet, dass sie auf der ersten Laufbahn abrollt und die zweite sowie die dritte Laufrolle sind derart angeordnet, dass sie auf der zweiten Laufbahn abrollen.

Es versteht sich, dass das Schienenelement in Ausführungsformen die zuvor im Hinblick auf die Funktionalität des Rollenwagens diskutierten Elemente optional aufweist.

Weitere Vorteile, Merkmale und Anwendungsmöglichkeiten werden anhand der folgenden Beschreibung einer Ausführungsform der vorliegenden Erfindung und der dazugehörigen Figuren deutlich. In den Figuren sind gleiche Elemente mit gleichen Bezugszeichen bezeichnet.
- Figur 1: ist eine schematische Seitenansicht einer Linearführung mit einem Rollenwagen gemäß einer Ausführungsform der vorliegenden Erfindung.
- Figur 2: ist eine isometrische, teilweise weggebrochene Ansicht von schräg vorne der Linearführung aus Figur 1 mit den Elementen des Rollenwagens in verriegelnden, bremsenden und eingeschalteten Positionen.
- Figur 3: ist eine schematische Seitenansicht in Längsrichtung der Linearführung mit den Elementen des Rollenwagens in den in Figur 2 gezeigten Positionen.
- Figur 4: ist eine schematische isometrische, teilweise weggebrochene Ansicht von schräg vorne der Linearführung aus den Figuren 1 bis 3 mit den Elementen des Rollenwagens in entriegelnden, bremsenden und eingeschalteten Positionen.
- Figur 5: ist eine schematische Seitenansicht in Längsrichtung der Linearführung mit den Elementen des Rollenwagens in den in Figur 4 gezeigten Positionen.
- Figur 6: ist eine schematische, isometrische, teilweise weggebrochene Ansicht von schräg vorne der Linearführung aus den Figuren 1 bis 5 mit den Elementen des Rollenwagens entriegelten, gelösten und ausgeschalteten Positionen.
- Figur 7: ist eine schematische Seitenansicht in Längsrichtung der Linearführung mit den Elementen des Rollenwagens in den in Figur 6 gezeigten Positionen.

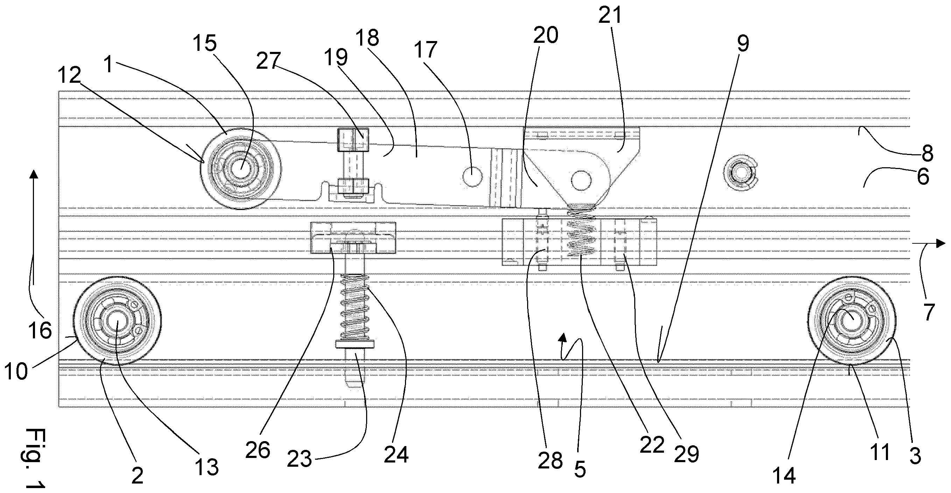

Die nun anhand der Figuren 1 bis 7 diskutierte Ausführungsform einer Linearführung 4 besteht aus einem Rollenwagen 5, welcher mit Hilfe von drei Laufrollen 1, 2, 3 in einem Schienenelement 6 in einer Längsrichtung 7 verschiebbar gegenüber dem Schienenelement 6 geführt ist.

In dem Rollenwagen 5 ist eine erste Laufrolle 1 vorgesehen, die an einer in den Darstellungen oberen Laufbahn 8 des Schienenelements 6 geführt ist, während eine zweite und eine dritte Laufrolle 2, 3 an einer in den Darstellungen unteren Laufbahn 9 des Schienenelements 6 geführt sind.

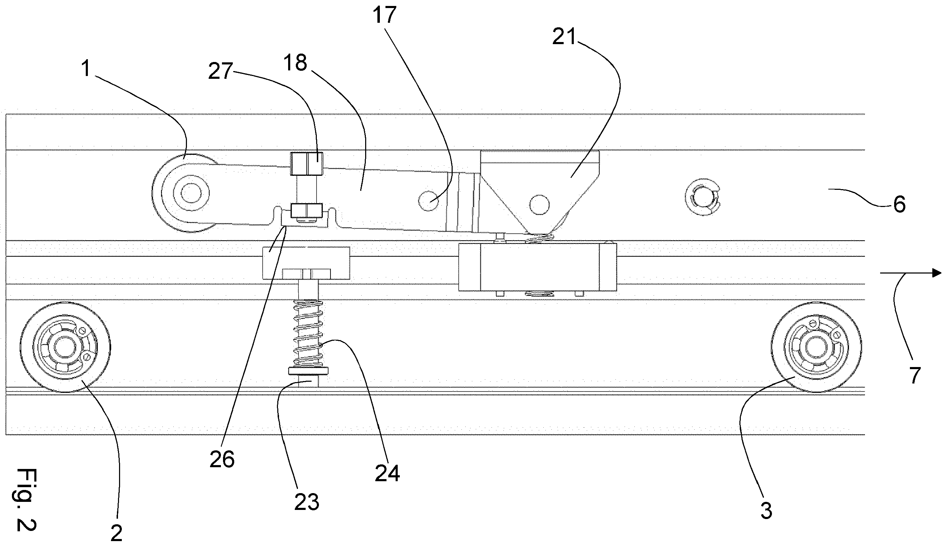

Die beiden unteren zweiten und dritten Laufrollen 2, 3 weisen wie in den Figuren 2 bis 7 gut zu erkennen, jeweils eine konkave Lauffläche 10, 11 auf, sodass diese zweiten und dritten Laufrollen 2, 3 auf der konvexen Laufbahn 9 des Schienenelements 6 so abrollt, dass die zweiten und dritten Laufrollen 2, 3 auch in einer Richtung parallel zu ihren Drehachsen 13, 14 eine seitliche Führung erfahren. Demgegenüber weist die erste Laufrolle 1 eine zylindrische Lauffläche 12 auf, welche Toleranzen in seitlicher Richtung parallel zu den Drehachsen 13, 14, 15 der Laufrollen 1, 2, 3 kompensiert.

Die erste Laufrolle 1 ist in der Längsrichtung 7 des Rollenwagens 5 zwischen der zweiten Laufrolle 2 und der dritten Laufrolle 3 angeordnet, um eine stabile Führung zu ermöglichen. Bei sehr langen Schienenelementen 6 ist es nur schwer möglich, die für einen stabilen und ruhigen Lauf des Rollenwagens erforderlichen Toleranzen an dem Schienenelement 6 einzuhalten. Daher verfügt der Rollenwagen 5 über einen Toleranzausgleich.

Dieser Toleranzausgleich ist dadurch realisiert, dass die Drehachse 15 der ersten Laufrolle 1 in einer Querrichtung 16 senkrecht zur Längsrichtung 7 federnd beweglich gelagert ist. Diese Querrichtung 16 kann im Sinne der gezeigten Einbaulage der Linearführung 4 auch als Hochrichtung bezeichnet werden. Die erste Laufrolle 1 ist an einer Schwinge um eine Schwenkachse 17 verschwenkbar gelagert.

Die Schwinge ist in Form eines Hebels 18 realisiert. Die Schwenkachse 17 unterteilt den Hebel 18 in einen ersten Arm 19, an dessen Ende die Drehachse 15 der ersten Laufrolle 1 montiert ist, und in einen zweiten Arm 20, an dessen Ende ein Bremsbacken 21 montiert ist. Der zweite Arm 20 ist mit Hilfe einer ersten Schraubenfeder 22 in Richtung auf die erste Laufbahn 8 des Schienenelements 6 hin vorgespannt. Diese Schraubenfeder 22 bildet im Sinne der vorliegenden Anmeldung ein erstes Federelement.

Ferner verfügt der Rollenwagen 5 über einen federnd in Richtung der zweiten Laufbahn 9 des Schienenelements 6 vorgespannten Verriegelungsbolzen 23. Für die erforderliche Vorspannung sorgt eine zweite Schraubenfeder 24, welche im Sinne der vorliegenden Anmeldung ein zweites Federelement bildet. In dem Schienenelement 6 sind neben der unteren Laufbahn 9 in regelmäßigen Abständen Löcher vorgesehen, in welche der Verriegelungsbolzen 23 eingreifen kann.

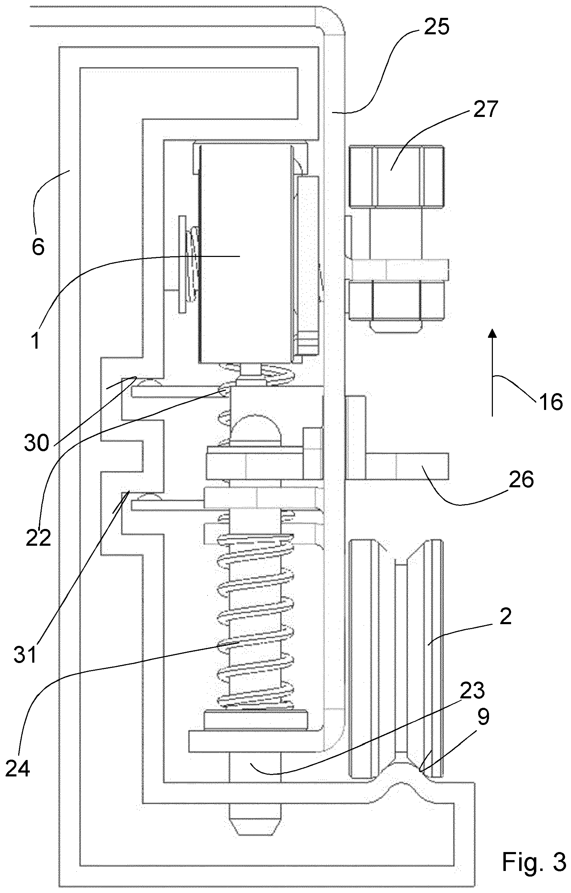

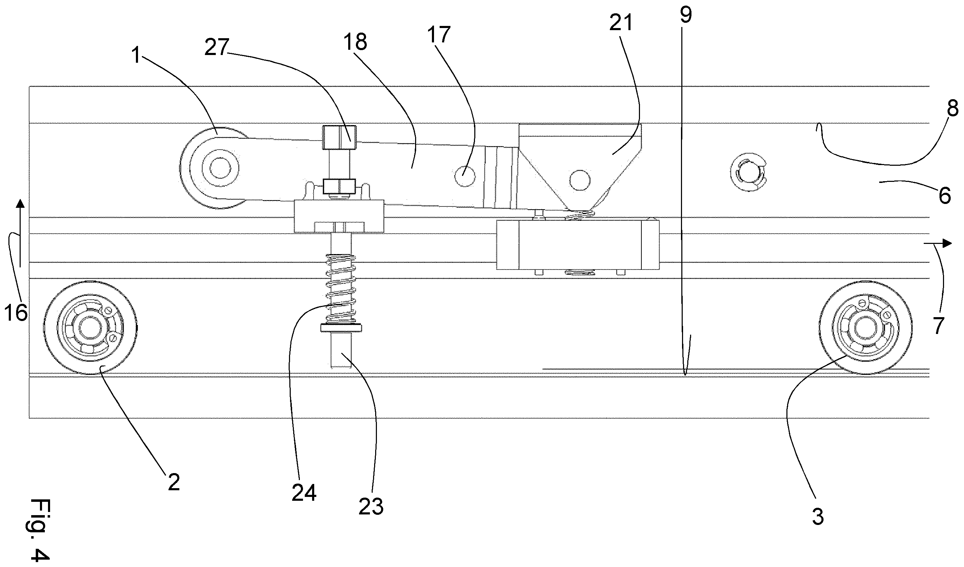

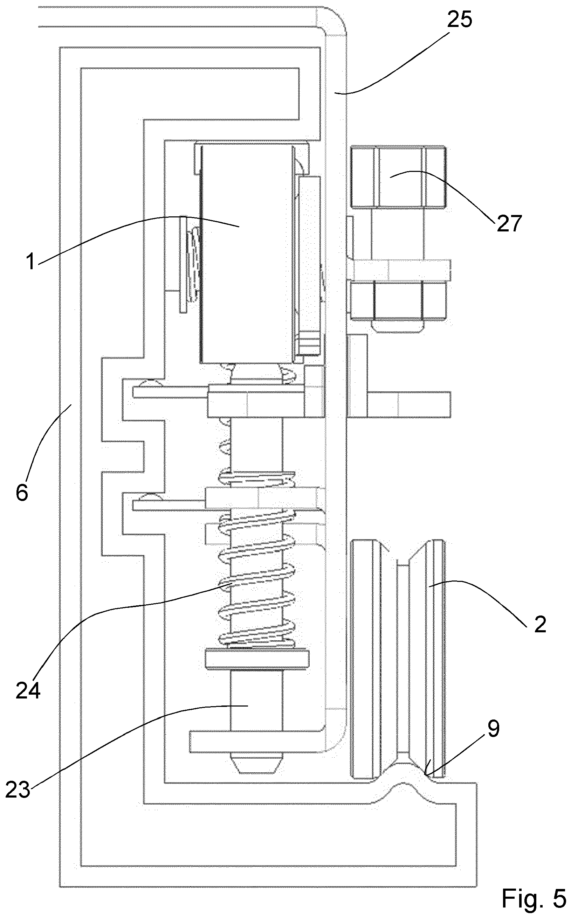

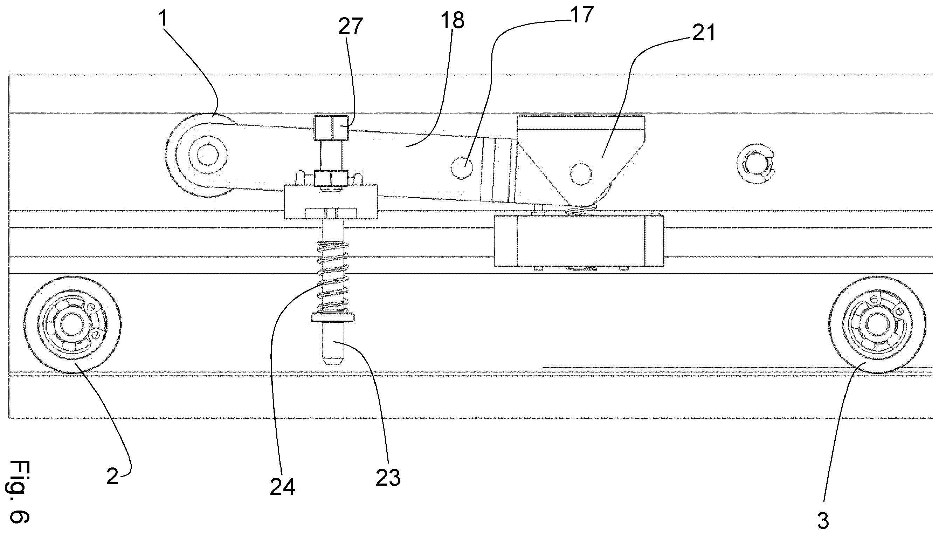

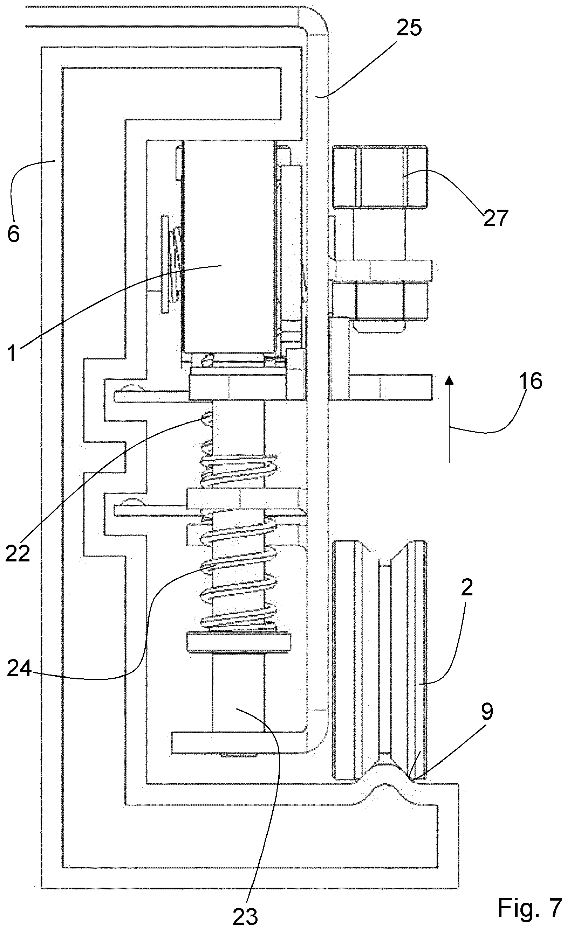

Dazu ist der Verriegelungsbolzen 23 in der Querrichtung 16 verschieblich gegenüber dem Träger 25 des Rollenwagens 5 gelagert. Wird der Verriegelungsbolzen 23 entgegen der Vorspannung der zweiten Schraubenfeder 24 in der Querrichtung 16 nach oben in Richtung des Hebels 18 verschoben, so kommt er mit einem Betätigungspunkt 26 am ersten Arm 19 des Hebels 18 in Eingriff und kann bei weiterer Bewegung in der Querrichtung 16 nach oben den Hebel 18 entgegen der Federkraft der ersten Schraubenfeder 22 verschwenken. Ist der Verriegelungsbolzen 23 mit dem Loch in dem Schienenelement 6 in Eingriff (siehe Figuren 2 und 3), so befindet sich dieser Verriegelungsbolzen 23 im Sinne der vorliegenden Anmeldung in der verriegelnden Position. Befindet sich der Verriegelungsbolzen 23 in einer Position, wie in den Figuren 4 und 5 dargestellt, wobei der Verriegelungsbolzen 23 außer Eingriff mit dem Schienenelement 6 ist, jedoch noch nicht auf den Hebel 18 drückt, so befindet sich der Verriegelungsbolzen 23 im Sinne vorliegenden Anmeldung in der entriegelnden Position. Wird der Verriegelungsbolzen 23 weiter nach oben in der Querrichtung 116 bewegt, so kommt mit dem Betätigungspunkt 26 des Hebels 18 in Eingriff. Er drückt so den Hebel 18 nach oben und befindet sich dann in der betätigenden Position im Sinne der vorliegenden Anmeldung (siehe Figuren 6 und 7).

Bei der Ausführungsform gemäß den Figuren 1 bis 7 wird der Verriegelungsbolzen 23 manuell von einem Benutzer mit Hilfe eines Bowdenzugs als Bedienmittel betätigt. Von diesem Bowdenzug ist in den Figuren 1 bis 7 nur ein verstellbares Zuggegenlager 27 gezeigt. Die Seele des Zuges wirkt unmittelbar auf einen Befestigungsabschnitt (nicht gezeigt) an dem Verriegelungsbolzen 23.

Die an dem Rollenwagen 5 vorgesehenen Elemente dienen dazu, den Rollenwagen 5 und mit ihm ein an diesem befestigtes Element sicher an dem Schienenelement 6 zu verriegeln, wenn der Rollenwagen nicht bewegt werden soll. Ferner ermöglichen es die Elemente des Rollenwagens 5 den Rollenwagen 5 zu entriegeln, während dieser noch mit Hilfe des Bremsbackens 21 gebremst ist. Nicht zuletzt stellt der Rollenwagen 5 nur dann eine elektrische Verbindung zwischen einem Schienenkontakt und einem Schaltelement des Rollenwagens 5 bereit, wenn der Rollenwagen 5 zumindest gebremst ist.

Im Folgenden wird nun die Funktion der einzelnen Elemente des Rollenwagens 5 im Zusammenwirken mit den Elementen des Schienenelements 6 erläutert. In dieser Beschreibung wird davon ausgegangen, dass sich zunächst der Rollenwagen 5 in einem stationären, gegenüber einer Verschiebung in der Längsrichtung 7 gegenüber dem Schienenelement 6 mit Hilfe des Verriegelungsbolzens 23 blockierten oder verriegelten Zustand befindet. Ausgangspunkt könnte aber genauso gut auch ein entriegelter Zustand des Rollenwagens 5 sein, wobei am Ende der Bewegungen der einzelnen Elemente des Rollenwagens 5 der verriegelte Zustand erreicht wird.

In den Figuren 2 und 3 ist der verriegelte Zustand des Rollenwagens 5 gegenüber dem Schienenelement 6 gezeigt. In diesem Zustand sind gleichzeitig zwei elektrische Kontakte 28, 29 in elektrischem Kontakt mit Leiterbahnen 30, 31, welche in das Schienenelement 6 integriert sind. Diese Kontakte 28, 29, 30, 31 dienen in der dargestellten Ausführungsform im verriegelten Zustand des Rollenwagens 5 gegenüber dem Schienenelement 6 der Strom-, und Spannungsversorgung eines elektrischen Verbrauchers, welcher mit dem Rollenwagen 5 bzw. einem an diesem montierten Element mitbewegt ist.

Die elektrischen Kontakte 28, 29 sind Teil eines elektrischen Kontaktelements des Rollenwagens 5. Dabei umfasst das Schaltelement darüber hinaus ein elektrisch leitend mit den beiden Kontakten 28, 29 verbundenes Anschlusselement in Form zweier Buchsen, wobei ein elektrischer Verbraucher über diese Buchse mit den Kontakten verbunden ist.

Betätigt nun ein Benutzer den Bowdenzug, so wird der Verriegelungsbolzen 23 entgegen der Vorspannung des zweiten Federelements 24 in der Querrichtung 16 nach oben gezogen und erreicht die entriegelnde Position, so wie sie in den Figuren 4 und 5 gezeigt ist. Um zu verhindern, dass sich in dieser entriegelnden Position des Verriegelungsbolzens 23 der Rollenwagen 5 bereits in Bewegung setzt, weist der Rollenwagen 5 zusätzlich zu dem Verriegelungsbolzen 23 eine Bremse auf. Kernbestandteil dieser Bremse ist der Bremsbacken 21 an dem zweiten Arm 20 des Hebels 18. Dieser Bremsbacken 21 ist von der ersten Schraubenfeder 22 vorgespannt in Reibeingriff mit der ersten Laufbahn 8 des Schienenelements 6. Daher ist im Sinne der vorliegenden Anmeldung der Bremsbacken 21 in den Darstellungen der Figuren 1 bis 5 in der bremsenden Position. Gleichzeitig ist aufgrund der Kopplung der Bewegungen des Bremsbackens 21 und der ersten Laufrolle 1 über den Hebel 18 die erste Laufrolle 1 in der freien Position. In der freien Position ist die erste Laufrolle 1 nicht in Eingriff mit der Laufbahn 8 des Schienenelements 6. In diesem entriegelten, gebremsten Zustand des Rollenwagens 5 sind nach wie vor die elektrischen Kontakte 28, 29 mit den entsprechenden Schienenkontakten 30, 31 des Schienenelements 6 in Eingriff.

Wird der Verriegelungsbolzen 23 mit Hilfe des Bowdenzugs weiter in der Querrichtung 16 nach oben in Richtung der ersten Laufbahn 8 bewegt, so kommt er mit dem Betätigungspunkt 26 des Hebels 18 in Eingriff und drückt diesen entgegen der Federkraft der ersten Schraubenfeder 22 mit dem ersten Arm 19 des Hebels 18 nach oben. So bewirkt der Verriegelungsbolzen 23 eine Verschwenkbewegung des Hebels 18. Der Bremsbacken 21 kommt außer Eingriff mit der Laufbahn 8 und gleichzeitig kommt die erste Laufrolle 1 in Eingriff mit der ersten Laufbahn 8.

Der Rollenwagen 5 ist nun entriegelt, ungebremst und frei gegenüber dem Schienenelement 6 in der Längsrichtung 7 verschieblich. Aufgrund einer mechanischen Kopplung der beiden Kontakte 28, 29 des Schaltelements an den zweiten Arm 20 des Hebels 18 werden während der Verschwenkbewegung des Hebels 18 auch die beiden Kontakte 28, 29 des Schaltelements außer Eingriff mit den Schienenkontakten 30, 31 des Schienenelements 6 gebracht. Die elektrische Verbindung zwischen dem Rollenwagen 5 und dem Schienenelement 6 ist unterbrochen.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht. Die Erfindung wird durch die beigefügten Ansprüche definiert.

### Bezugszeichenliste

- 1, 2, 3: Laufrolle
- 4: Linearführung
- 5: Rollenwagen
- 6: Schienenelement
- 7: Längsrichtung
- 8, 9: Laufbahn
- 10, 11, 12: Lauffläche
- 13, 14, 15: Drehachse
- 16: Querrichtung
- 17: Schwenkachse
- 18: Hebel
- 19: erster Arm des Hebels
- 20: zweiter Arm des Hebels
- 21: Bremsbacken
- 22: erste Schraubenfeder
- 23: Verriegelungsbolzen
- 24: zweite Schraubenfeder
- 25: Träger
- 26: Betätigungspunkt
- 27: Zuggegenlager
- 28, 29: elektrische Kontakte
- 30,31: Schienenkontakte

## Patentansprüche

1. Rollenwagen (5) zum verschiebbaren linearen Führen in einer Längsrichtung an einem Schienenelement (6),
wobei der Rollenwagen (5) aufweist
einen Träger (25),
eine erste Laufrolle (1) oder ein erstes Paar von Laufrollen,
eine zweite Laufrolle (2) oder ein zweites Paar von Laufrollen und
eine dritte Laufrolle (3) oder ein drittes Paar von Laufrollen,
wobei jede der ersten Laufrolle (1) oder des ersten Paars von Laufrollen, der zweiten Laufrolle (2) oder des zweiten Paars von Laufrollen und der dritten Laufrolle (1, 2, 3) oder des dritten Paars von Laufrollen jeweils um eine Drehachse (13, 14, 15) drehbar an dem Träger (25) montiert ist,
wobei die Drehachsen (13, 14, 15) im Wesentlichen parallel zu einander sind und
wobei die erste Laufrolle (1) oder das erste Paar von Laufrollen, die zweite Laufrolle (2) oder das zweite Paar von Laufrollen und die dritte Laufrolle (3) oder das dritte Paar von Laufrollen derart an dem Rollenwagen (5) angeordnet sind, dass die erste Laufrolle (1) oder das erste Paar von Laufrollen mit einer ersten Laufbahn (8) des Schienenelements (6) in Eingriff bringbar ist und die zweite Laufrolle (2) oder das zweite Paar von Laufrollen und die dritte Laufrolle (3) oder das dritte Paar von Laufrollen mit einer zweiten Laufbahn (9) des Schienenelements (6) in Eingriff bringbar sind,
wobei eine der ersten Laufrolle (1) oder des ersten Paars von Laufrollen, der zweiten Laufrolle (2) oder des zweiten Paars von Laufrollen und der dritten Laufrolle (3) oder des dritten Paars von Laufrollen in einer Querrichtung (16) senkrecht zu der Längsrichtung (7) gegenüber dem Träger (25) beweglich gelagert ist und
wobei die beweglich gelagerte Laufrolle (1, 2, 3) mit einem ersten Federelement (22) in der Querrichtung (16) federnd vorgespannt ist.
wobei der Rollenwagen (5) einen gegenüber dem Träger (25) um eine Schwenkachse (17) verschwenkbaren Hebel (18) aufweist,
wobei der Hebel (18) einen ersten Arm (19) aufweist,
wobei die beweglich gelagerte Laufrolle (1, 2, 3) oder das beweglich gelagerte Paar von Laufrollen um die Drehachse (13, 14, 15) drehbar an dem ersten Arm (19) montiert ist und wobei der Hebel (18) mit dem ersten Federelement (22) in einer Schwenkrichtung federnd vorgespannt ist,
**dadurch gekennzeichnet, dass** der Hebel (18) einen zweiten Arm (20) aufweist,
wobei die Schwenkachse (17) den Hebel (18) in den ersten Arm (19) und den zweiten Arm (20) teilt,
wobei an dem zweiten Arm (20) ein mit der ersten Laufbahn (8) in Eingriff bringbarer Bremsbacken (21) angeordnet ist,
so dass die beweglich gelagerte Laufrolle (1) oder das beweglich gelagerte Paar von Laufrollen aus einer führenden Position in eine freie Position und gleichzeitig der Bremsbacken (21) aus einer gelösten Position in eine bremsende Position verschwenkbar ist.

2. Rollenwagen (5) nach dem vorhergehenden Anspruch, **dadurch gekennzeichnet, dass** der Rollenwagen (5) genau drei Laufrollen (1, 2, 3) oder Paare von Laufrollen aufweist, wobei genau eine der ersten Laufrolle (1) oder des ersten Paars von Laufrollen, der zweiten Laufrolle (2) oder des zweiten Paars von Laufrollen und der dritten Laufrolle (3) oder des dritten Paars von Laufrollen in der Querrichtung (16) federnd vorgespannt ist.

3. Rollenwagen (5) nach einem der vorhergehenden Ansprüche, **dadurch gekennzeichnet, dass** die erste Laufrolle (1) oder das erste Paar von Laufrollen in der Querrichtung (16) federnd vorgespannt ist.

4. Rollenwagen (5) nach einem der vorhergehenden Ansprüche, **dadurch gekennzeichnet, dass** die erste Laufrolle (1) oder das erste Paar von Laufrollen in der Längsrichtung (7) zwischen der zweiten Laufrolle (2) oder dem zweiten Paar von Laufrollen und der dritten Laufrolle (3) oder dem dritten Paar von Laufrollen angeordnet ist.

5. Rollenwagen (5) nach einem der vorhergehenden Ansprüche, **dadurch gekennzeichnet, dass** der Hebel (18) derart federnd vorgespannt ist, dass in einem relativ entspannten Zustand des ersten Federelements (22) der Bremsbacken (21) in der bremsenden Position ist und die beweglich gelagerte Laufrolle (1) oder das beweglich gelagerte Paar von Laufrollen in der freien Position ist und dass in einem relativ gespannten Zustand des ersten Federelements (22) der Bremsbacken (21) in der gelösten Position ist und die beweglich gelagerte Laufrolle (1) oder das beweglich gelagerte Paar von Laufrollen in der führenden Position ist.

6. Rollenwagen (5) nach einem der vorhergehenden Ansprüche, **dadurch gekennzeichnet, dass** der Hebel (18) einen mit einem Betätigungsmittel in Eingriff bringbaren Betätigungspunkt (26) aufweist.

7. Rollenwagen (5) nach Anspruch 6, **dadurch gekennzeichnet, dass** der Rollenwagen (5) ein Betätigungsmittel aufweist, wobei das Betätigungsmittel ein von einem Benutzer betätigbares Bedienelement ist.

8. Rollenwagen (5) nach Ansprüchen 5 und 6, **dadurch gekennzeichnet, dass** der Rollenwagen (5) ein Betätigungsmittel aufweist,
wobei das Betätigungsmittel ein Verrieglungsbolzen (23) ist,
wobei der Verriegelungsbolzen (23) in einer Querrichtung (16) aus einer verriegelnden Position über eine entriegelnde Position in eine betätigende Position beweglich an dem Träger (25) montiert ist,
wobei der Verriegelungsbolzen (23) mit einem zweiten Federelement (24) federnd in die verriegelnde Position vorgespannt ist,
wobei der Verriegelungsbolzen (23) und der Hebel (18) mit dem Betätigungspunkt (26) derart ausgestaltet und angeordnet sind, dass wenn der Bremsbacken (21) in der bremsenden Position ist, der Verriegelungsbolzen (23) entgegen einer Federkraft des zweiten Federelements (24) aus der verriegelnden Position in die entriegelnde Position bewegbar ist während der Bremsbacken (21) in der bremsenden Position verbleibt, und dass wenn der Verriegelungsbolzen (32) entgegen der Federkraft des zweiten Federelements (24) aus der entriegelnden Position in die betätigende Position bewegt wird, der Verriegelungsbolzen (23) mit dem Betätigungspunkt (26) in Eingriff ist und den Bremsbacken (21) aus der bremsenden Position in die gelöste Position verschwenkt sowie die erste Führungsrolle (1) aus der freien Position in die führende Position verschwenkt.

9. Rollenwagen (5) nach dem vorhergehenden Anspruch, **dadurch gekennzeichnet, dass** der Rollenwagen (5) ein von einem Benutzer betätigbares Bedienmittel aufweist, das derart angeordnet und ausgestaltet ist, dass das Bedienmittel bei einer Betätigung den Verriegelungsbolzen (23) aus der verriegelnden Position über die entriegelnde Position in die auslösende Position bewegt.

10. Rollenwagen (5) nach einem der vorgehenden Ansprüche, **dadurch gekennzeichnet, dass** der Rollenwagen (5) ein elektrisches Schaltelement aufweist,
wobei das Schaltelement umfasst
einen elektrischen Kontakt (28, 29) und
ein elektrisch leitend mit dem Kontakt (28, 29) verbundenes Anschlusselement,
wobei der Kontakt (28, 29) in der Querrichtung (16) aus einer eingeschalteten Position in eine ausgeschaltete Position verschiebbar an dem Träger (26) montiert ist, so dass der Kontakt (28, 29) mit einem komplementären an dem Schienenelement (6) angeordneten Schienenkontakt (30,31) verbindbar und von diesem lösbar ist,
wobei der Kontakt (28, 29) derart mechanisch wirksam mit dem Hebel (18) gekoppelt ist, dass eine Verschwenkbewegung des Hebels (18) ein Verschieben des Kontakts (28, 29) in der Querrichtung (16) aus der eingeschalteten Position in die ausgeschaltete Position oder umgekehrt bewirkt, und
wobei das Anschlusselement derart ausgestaltet ist, dass mit dem Anschlusselement eine mit dem Rollenwagen (5) mitbewegte elektrische Einrichtung, insbesondere ein elektrischer Verbraucher, verbindbar ist.

11. Rollenwagen (5) nach dem vorhergehenden Anspruch, **dadurch gekennzeichnet, dass** der Kontakt (28, 29) derart mechanisch wirksam mit dem Hebel (18) gekoppelt ist, dass dann wenn der Bremsbacken (21) in der gelösten Position ist, der Kontakt (30, 31) in der ausgeschalteten Position ist und dann wenn der Bremsbacken (21) in der bremsenden Position ist, der Kontakt (28, 29) in der eingeschalteten Position ist.

12. Rollenwagen (5) nach einem der vorgehenden Ansprüche, **dadurch gekennzeichnet, dass** zumindest die zweite Laufrolle (2) oder das zweite Paar von Laufrollen oder die dritte Laufrolle (3) oder das dritte Paar von Laufrollen eine in einem Querschnitt parallel zu der Drehachse konkave Lauffläche (11, 12) aufweist.

13. Linearführung (4) mit einem Rollenwagen (5) nach einem der vorhergehenden Ansprüche und einem Schienenelement (6) mit einer ersten Laufbahn (8) und einer zweiten Laufbahn (9), wobei erste Laufrolle (1) oder das erste Paar von Laufrollen derart angeordnet ist, dass die erste Laufrolle (1) oder das erste Paar von Laufrollen auf der ersten Laufbahn (8) abrollt und die zweite Laufrolle (2) oder das zweite Paar von Laufrollen sowie die dritte Laufrolle (3) oder das dritte Paar von Laufrollen derart angeordnet sind, dass sie auf der zweiten Laufbahn (9) abrollen.

## Claims

1. Roller carriage (5) for displaceable linear guidance in a longitudinal direction on a rail element (6),
wherein the roller carriage (5) comprises
a carrier (25),
a first roller (1) or a first pair of rollers,
a second roller (2) or a second pair of rollers, and
a third roller (3) or a third pair of rollers,
wherein every one of the first roller (1) or the first pair of rollers, the second roller (2) or the second pair of rollers and the third roller (1, 2, 3) or the third pair of rollers is mounted on the carrier (25) such that each can rotate about a rotating axle (13, 14, 15),
wherein the rotating axles (13, 14, 15) are substantially parallel to one another, and
wherein the first roller (1) or the first pair of rollers, the second roller (2) or the second pair of rollers and the third roller (3) or the third pair of rollers are disposed on the roller carriage (5) such that the first roller (1) or the first pair of rollers can be brought into engagement with a first track (8) of the rail element (6) and the second roller (2) or the second pair of rollers and the third roller (3) or the third pair of rollers can be brought into engagement with a second track (9) of the rail element (6),
wherein one of the first roller (1) or the first pair of rollers, the second roller (2) or the second pair of rollers and the third roller (3) or the third pair of rollers is mounted such that it can move in a transverse direction (16) perpendicular to the longitudinal direction (7) relative to the carrier (25), and
wherein the movably mounted roller (1, 2, 3) is resiliently pretensioned in transverse direction (16) by a first spring element (22),
wherein the roller carriage (5) comprises a lever (18) which can be pivoted relative to the carrier (25) about a pivot axis (17),
wherein the lever (18) comprises a first arm (19),
wherein the movably mounted roller (1, 2, 3) or the movably mounted pair of rollers is mounted on the first arm (19) such that it can rotate about the rotating axle (13, 14, 15), and
wherein the lever (18) is resiliently pretensioned in a pivoting direction by the first spring element (22),
**characterized in that** the lever (18) comprises a second arm (20),
wherein the pivot axis (17) divides the lever (18) into the first arm (19) and the second arm (20),
wherein a brake shoe (21) which can be brought into engagement with the first track (8) is disposed on the second arm (20),
so that the movably mounted roller (1) or the movably mounted pair of rollers can be pivoted from a guiding position into a free position and at the same time the brake shoe (21) can be pivoted from a released position into a braking position.

2. Roller carriage (5) according to the preceding claim, **characterized in that** the roller carriage (5) comprises exactly three rollers (1, 2, 3) or pairs of rollers, wherein exactly one of the first roller (1) or the first pair of rollers, the second roller (2) or the second pair of rollers and the third roller (3) or the third pair of rollers is resiliently pretensioned in transverse direction (16).

3. Roller carriage (5) according to any one of the preceding claims, **characterized in that** the first roller (1) or the first pair of rollers is resiliently pretensioned in transverse direction (16).

4. Roller carriage (5) according to any one of the preceding claims, **characterized in that** the first roller (1) or the first pair of rollers is disposed in longitudinal direction (7) between the second roller (2) or the second pair of rollers and the third roller (3) or the third pair of rollers.

5. Roller carriage (5) according to any one of the preceding claims, **characterized in that** the lever (18) is resiliently pretensioned such that, in a relatively relaxed state of the first spring element (22), the brake shoe (21) is in the braking position and the movably mounted roller (1) or the movably mounted pair of rollers is in the free position and that, in a relatively tensioned state of the first spring element (22), the brake shoe (21) is in the released position and the movably mounted roller (1) or the movably mounted pair of rollers is in the guiding position.

6. Roller carriage (5) according to any one of the preceding claims, **characterized in that** the lever (18) comprises an actuation point (26) which can be brought into engagement with an actuating means.

7. Roller carriage (5) according to Claim 6, **characterized in that** the roller carriage (5) comprises an actuating means, wherein the actuating means is an operating element which can be actuated by a user.

8. Roller carriage (5) according to Claims 5 and 6, **characterized in that** the roller carriage (5) comprises an actuating means,
wherein the actuating means is a locking bolt (23),
wherein the locking bolt (23) is mounted on the carrier (25) such that it can move in a transverse direction (16) from a locking position via an unlocking position into an actuating position,
wherein the locking bolt (23) is resiliently pretensioned into the locking position by a second spring element (24),
wherein the locking bolt (23) and the lever (18) having the actuation point (26) are configured and disposed such that, when the brake shoe (21) is in the braking position, the locking bolt (23) can be moved from the locking position into the unlocking position against a spring force of the second spring element (24) while the brake shoe (21) remains in the braking position, and that, when the locking bolt (32) is moved from the unlocking position into the actuating position against the spring force of the second spring element (24), the locking bolt (23) is in engagement with the actuation point (26) and pivots the brake shoe (21) from the braking position into the released position and pivots the first guide roller (1) from the free position into the guiding position.

9. Roller carriage (5) according to the preceding claim, **characterized in that** the roller carriage (5) comprises an operating means which can be actuated by a user and is disposed and configured such that, when actuated, the operating means moves the locking bolt (23) from the locking position via the unlocking position into the releasing position.

10. Roller carriage (5) according to any one of the preceding claims, **characterized in that** the roller carriage (5) comprises an electrical switching element,
wherein the switching element comprises
an electrical contact (28, 29) and
a connecting element which is connected to the contact (28, 29) in an electrically conductive manner,
wherein the contact (28, 29) is mounted on the carrier (26) such that it can be displaced in transverse direction (16) from a switched-on position into a switched-off position so that the contact (28, 29) can be connected to and disconnected from a complementary rail contact (30, 31) disposed on the rail element (6),
wherein the contact (28, 29) is mechanically operatively coupled to the lever (18) such that a pivoting movement of the lever (18) causes a displacement of the contact (28, 29) in transverse direction (16) from the switched-on position into the switched-off position or vice versa, and
wherein the connecting element is configured such that an electrical device, in particular an electrical consumer, moved along with the roller carriage (5), can be connected to said connecting element.

11. Roller carriage (5) according to the preceding claim, **characterized in that** the contact (28, 29) is mechanically operatively coupled to the lever (18) such that, when the brake shoe (21) is in the released position, the contact (30, 31) is in the switched-off position and when the brake shoe (21) is in the braking position, the contact (28, 29) is in the switched-on position.

12. Roller carriage (5) according to any one of the preceding claims, **characterized in that** at least the second roller (2) or the second pair of rollers or the third roller (3) or the third pair of rollers has a running surface (11, 12) which is concave in a cross-section parallel to the rotating axle.

13. Linear guide (4) with a roller carriage (5) according to any one of the preceding claims and a rail element (6) comprising a first track (8) and a second track (9), wherein the first roller (1) or the first pair of rollers is disposed such that the first roller (1) or the first pair of rollers rolls on the first track (8) and the second roller (2) or the second pair of rollers and the third roller (3) or the third pair of rollers are disposed such that they roll on the second track (9).

## Revendications

1. Chariot à galets (5) permettant un guidage linéaire coulissant dans une direction longitudinale sur un élément formant rail (6),
le chariot à galets (5) comprenant
un support (25),
un premier galet de roulement (1) ou une première paire de galets de roulement,
un deuxième galet de roulement (2) ou une deuxième paire de galets de roulement et
un troisième galet de roulement (3) ou une troisième paire de galets de roulement,
chacun(e) parmi le premier galet de roulement (1) ou la première paire de galets de roulement, le deuxième galet de roulement (2) ou la deuxième paire de galets de roulement et le troisième galet de roulement (1, 2, 3) ou la troisième paire de galets de roulement étant monté(e) sur le support (25) de manière à pouvoir tourner autour d'un axe de rotation (13, 14, 15),
les axes de rotation (13, 14, 15) étant essentiellement parallèles les uns aux autres et
le premier galet de roulement (1) ou la première paire de galets de roulement, le deuxième galet de roulement (2) ou la deuxième paire de galets de roulement et le troisième galet de roulement (3) ou la troisième paire de galets de roulement étant agencés sur le chariot à galets (5) de telle manière que le premier galet de roulement (1) ou la première paire de galets de roulement puisse être mis(e) en prise avec un premier chemin de roulement (8) de l'élément formant rail (6) et le deuxième galet de roulement (2) ou la deuxième paire de galets de roulement et le troisième galet de roulement (3) ou la troisième paire de galets de roulement puissent être mis(es) en prise avec un second chemin de roulement (9) de l'élément formant rail (6),
un(e) parmi le premier galet de roulement (1) ou la première paire de galets de roulement, le deuxième galet de roulement (2) ou la deuxième paire de galets de roulement et le troisième galet de roulement (3) ou la troisième paire de galets de roulement étant monté(e) mobile par rapport au support (25) dans une direction transversale (16) perpendiculaire à la direction longitudinale (7) et
le galet de roulement (1, 2, 3) monté mobile étant précontraint de manière élastique par un premier élément formant ressort (22) dans la direction transversale (16),
le chariot à galets (5) comprenant un levier (18) pouvant pivoter par rapport au support (25) autour d'un axe de pivotement (17),
le levier (18) comprenant un premier bras (19),
le galet de roulement (1, 2, 3) monté mobile ou la paire de galets de roulement montée mobile étant monté(e) sur le premier bras (19) de manière à pouvoir tourner autour de l'axe de rotation (13, 14, 15) et
le levier (18) étant précontraint de manière élastique dans une direction de pivotement par le premier élément formant ressort (22),
**caractérisé en ce que** le levier (18) comprend un second bras (20),
l'axe de pivotement (17) divisant le levier (18) en un premier bras (19) et un second bras (20),
une mâchoire de freinage (21) pouvant être mise en prise avec le premier chemin de roulement (8) étant agencée sur le second bras (20),
de sorte que le galet de roulement (1) monté mobile ou la paire de galets de roulement montée mobile puisse pivoter d'une position de guidage à une position libre et la mâchoire de freinage (21) puisse simultanément pivoter d'une position desserrée à une position de freinage.

2. Chariot à galets (5) selon la revendication précédente, **caractérisé en ce que** le chariot à galets (5) comprend exactement trois galets de roulement (1, 2, 3) ou paires de galets de roulement, exactement un(e) parmi le premier galet de roulement (1) ou la première paire de galets de roulement, le deuxième galet de roulement (2) ou la deuxième paire de galets de roulement et le troisième galet de roulement (3) ou la troisième paire de galets de roulement étant précontraint(e) de manière élastique dans la direction transversale (16).

3. Chariot à galets (5) selon l'une quelconque des revendications précédentes, **caractérisé en ce que** le premier galet de roulement (1) ou la première paire de galets de roulement est précontraint(e) de manière élastique dans la direction transversale (16).

4. Chariot à galets (5) selon l'une quelconque des revendications précédentes, **caractérisé en ce que** le premier galet de roulement (1) ou la première paire de galets de roulement est agencé(e) dans la direction longitudinale (7) entre le deuxième galet de roulement (2) ou la deuxième paire de galets de roulement et le troisième galet de roulement (3) ou la troisième paire de galets de roulement.

5. Chariot à galets (5) selon l'une quelconque des revendications précédentes, **caractérisé en ce que** le levier (18) est précontraint de manière élastique de telle manière que, dans un état relativement détendu du premier élément formant ressort (22), la mâchoire de freinage (21) est en position de freinage et le galet de roulement (1) monté mobile ou la paire de galets de roulement montée mobile est en position libre et **en ce que**, dans un état relativement tendu du premier élément formant ressort (22), la mâchoire de freinage (21) est en position desserrée et le galet de roulement (1) monté mobile ou la paire de galets de roulement montée mobile est en position de guidage.

6. Chariot à galets (5) selon l'une quelconque des revendications précédentes, **caractérisé en ce que** le levier (18) a un point d'actionnement (26) pouvant être mis en prise avec un moyen d'actionnement.

7. Chariot à galets (5) selon la revendication 6, **caractérisé en ce que** le chariot à galets (5) comprend un moyen d'actionnement, le moyen d'actionnement étant un élément de commande pouvant être actionné par un utilisateur.

8. Chariot à galets (5) selon les revendications 5 et 6, **caractérisé en ce que** le chariot à galets (5) comprend un moyen d'actionnement,
le moyen d'actionnement étant un doigt de verrouillage (23),
le doigt de verrouillage (23) étant monté mobile sur le support (25) dans une direction transversale (16) à partir d'une position de verrouillage jusqu'à une position d'actionnement en passant par une position de déverrouillage,
le doigt de verrouillage (23) étant précontraint de manière élastique dans la position de verrouillage par un second élément formant ressort (24),
le doigt de verrouillage (23) et le levier (18) avec le point d'actionnement (26) étant conçus et agencés de telle manière que lorsque la mâchoire de frein (21) est en position de freinage, le doigt de verrouillage (23) puisse être déplacé de la position de verrouillage jusqu'à la position de déverrouillage à l'encontre d'une force élastique du second élément formant ressort (24) tandis que la mâchoire de frein (21) reste en position de freinage, et de telle manière que lorsque le doigt de verrouillage (32) est déplacé de la position de déverrouillage jusqu'à la position d'actionnement à l'encontre de la force élastique du second élément formant ressort (24), le doigt de verrouillage (23) soit en prise avec le point d'actionnement (26) et fasse pivoter la mâchoire de frein (21) de la position de freinage jusqu'à la position desserrée et fasse ainsi pivoter le premier galet de guidage (1) de la position libre jusqu'à la position de guidage.

9. Chariot à galets (5) selon la revendication précédente, **caractérisé en ce que** le chariot à galets (5) comprend un moyen de commande pouvant être actionné par un utilisateur et qui est agencé et conçu de telle manière que le moyen de commande, lorsqu'il est actionné, déplace le doigt de verrouillage (23) de la position de verrouillage jusqu'à la position de libération en passant par la position de déverrouillage.

10. Chariot à galets (5) selon l'une quelconque des revendications précédentes, **caractérisé en ce que** le chariot à galets (5) comprend un élément de commutation électrique,
l'élément de commutation comprenant
un contact électrique (28, 29) et
un élément de raccordement relié de manière électriquement conductrice au contact (28, 29),
le contact (28, 29) étant monté sur le support (26) de manière coulissante dans la direction transversale (16) à partir d'une position commutée jusqu'à une position non commutée, de sorte que le contact (28, 29) puisse être relié à un contact de rail (30, 31) complémentaire agencé sur l'élément formant rail (6) et peut en être libéré,
le contact (28, 29) étant couplé de manière mécaniquement active au levier (18) de telle manière qu'un mouvement de pivotement du levier (18) provoque un coulissement du contact (28, 29) dans la direction transversale (16) de la position commutée jusqu'à la position non commutée ou inversement, et
l'élément de raccordement étant conçu de telle manière qu'un dispositif électrique déplacé avec le chariot à galets (5), en particulier un consommateur électrique, puisse être relié à l'élément de raccordement.

11. Chariot à galets (5) selon la revendication précédente, **caractérisé en ce que** le contact (28, 29) est couplé de manière mécaniquement active au levier (18) de telle manière que, lorsque la mâchoire de freinage (21) est dans la position desserrée, le contact (30, 31) soit dans la position non commutée et, lorsque la mâchoire de freinage (21) est dans la position de freinage, le contact (28, 29) soit dans la position commutée.

12. Chariot à galets (5) selon l'une quelconque des revendications précédentes, **caractérisé en ce qu'**au moins le deuxième galet de roulement (2) ou la deuxième paire de galets de roulement ou le troisième galet de roulement (3) ou la troisième paire de galets de roulement comprenne une surface de roulement (11, 12) concave et parallèle à l'axe de rotation en coupe transversale.

13. Guidage linéaire (4) comprenant un chariot à galets (5) selon l'une quelconque des revendications précédentes et un élément formant rail (6) avec un premier chemin de roulement (8) et un second chemin de roulement (9), le premier galet de roulement (1) ou la première paire de galets de roulement étant agencé(e) de telle manière que le premier galet de roulement (1) ou la première paire de galets de roulement roule sur le premier chemin de roulement (8) et le second galet de roulement (2) ou la seconde paire de galets de roulement ainsi que le troisième galet de roulement (3) ou la troisième paire de galets de roulement étant agencé(e)s de telle manière qu'ils roulent sur le second chemin de roulement (9).
